# EUROPEAN PATENT SPECIFICATION

(11) **EP 1 009 970 B1**
(45) Date of publication and mention of the grant of the patent: **05.03.2003**
(21) Application number: 97932116.3
(22) Date of filing: 07.07.1997
(51) Int. Cl.: G01B 11/24

(54) **A DEBURRING METHOD**
ENTGRATEVERFAHREN
PROCEDE D'EBAVURAGE

(30) Priority: 11.07.1996 SE 9602754
(43) Date of publication of application: 21.06.2000
(73) Proprietor: SMT Tricept AB, Västeras 721 22 (SE)
(72) Inventor: NEUMANN, Karl-Erik, S-760 15 Gräddö (SE)
(74) Representative: Karlsson, Leif Karl Gunnar
(86) International application number: SE9701240
(87) International publication number: WO98002717

(56) References cited:
- CH-A- 684 656
- SE-B- 403 321

## Description

### TECHNICAL FIELD:

The present invention relates to a deburring method, primarily in the workshop industry after a milling operation, for instance.

### BACKGROUND ART:

When a surface is machined by milling, casting components in metallic material or injection-moulding plastic components, for instance, burrs are formed at the edge of the surface, i.e. where the surface joins a second surface inclined in relation to said first surface. Previously burrs have been removed manually or by following the burr edge with a milling tool provided with a power sensor, the milling tool being pressed against the edge of the burr with a constant pressure in order to remove the burr. Performing manual deburring is a time-consuming operation and thus not cost efficient. Performing deburring with a milling tool provided with power sensor results either in the burrs remaining being too large, or in the edge being damaged, if the tolerance requirement is high.

Document CH684656 A5 describes using a laser and too detectors, one detector placed behind an off-axis parabolic imaging element, whereby workpiece edges can be recognised.

### OBJECT OF THE INVENTION:

The object of the present invention is to provide a method for deburring machined workpieces that solves the problems entailed in previous deburring methods. Another object is to control a robot system for a fully automatic deburring operation.

Specific to the present invention is the method of taking a reading, calculating and extrapolating a cutting curve between two surfaces, and controlling a positioning head provided with a deburring tool in relation to the calculated cutting curve of the workpiece.

### SUMMARY OF THE INVENTION:

Using a laser of linear type, for instance, to scan an edge provided with burrs, an image is obtained which represents the defining line of a first surface and the defining line of a second surface. In view of the extension of the burr over the cutting curve of the surfaces a discontinuity is obtained caused by the bundle of laser rays being shadowed in the image obtained. This discontinuity is eliminated through an extrapolation calculation of the shaded surface in the direction of the unshaded surface in the imagine, thereby giving the cutting curve. A deburring tool is then controlled to cut along the cutting curve.

### BRIEF DESCRIPTION OF THE DRAWINGS:

The invention will now be described in more detail with reference to the accompanying drawings.
- Figure 1a: shows a laser-illuminated edge of a workpiece with burrs, before being deburred by the method according to the present invention.
- Figure 1b: shows a laser-scanned image according to Figure 1a.
- Figure 1c: shows extrapolation to the cutting curve.
- Figure 1d: shows the result of the extrapolation according to the invention.
- Figure 2: shows the edge with burrs, seen from above.
- Figure 3: shows the result after deburring according to the invention.

### DESCRIPTION OF THE INVENTION:

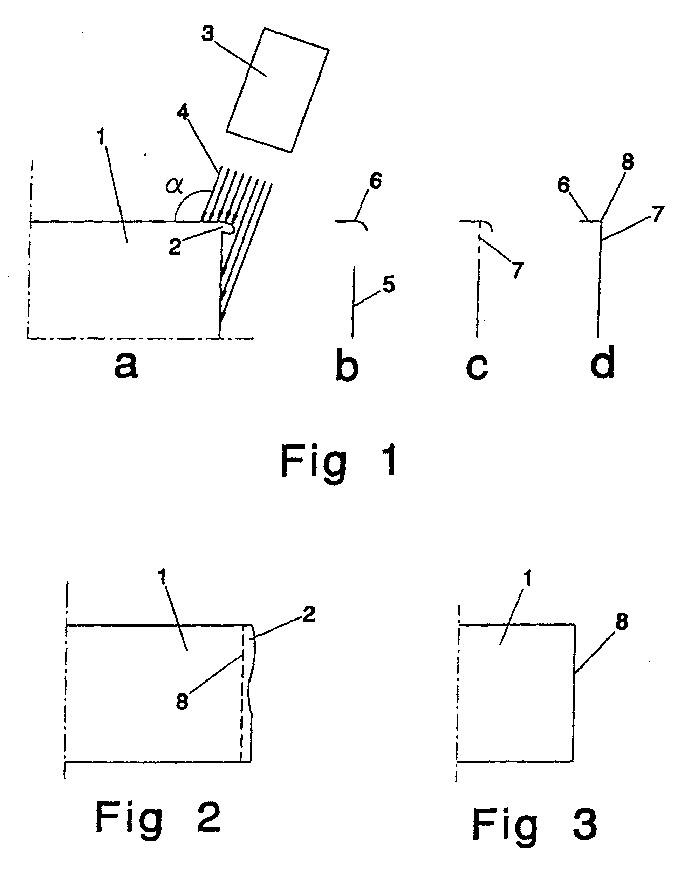

A burr 2 has been formed on the edge of a workpiece 1 after a milling operation, for instance, and must be removed. For this purpose a linear laser 3 is used in conjunction with a deburring tool. The laser 3 with its bundle of rays 4, illuminates the burr and thus the edge line of the workpiece through an angle α where α is chosen so that the laser illuminates the adjoining surfaces in suitable manner. The angle a is determined taking into consideration the size and extension of the burr. A suitable choice for the laser setting is for the laser 3 to be directed towards the edge line of a workpiece (1) with burrs through the angle a between the illumination direction and the burr-emanating second surface, where 90° < α < 180°. After an evaluation, the result of the laser illumination produces an image, see Figure 1b defined by a first surface, the adjoining surface 5, and a second surface the burr surface 6. This laser image is determined in relation to the deburring tool as to position and appearance. The laser image then undergoes calculation to determine which of the two surfaces is deemed to be the burr surface 6, whereupon the other surface is consequently defined as the adjoining surface 5. After this calculation an extrapolation of the adjoining surface 5 is performed towards the burr surface 6, resulting in an extrapolation surface 7, see Figure 1c. The extrapolation is performed up to the cutting curve 8 between the extrapolation surface 7 and the burr surface 6, see Figure 1d.

A calculation has thus been performed where the cutting curve 8, see Figure 2, is relative to the deburring tool regardless of the appearance of the burr 2 or the workpiece 1. For the sake of simplicity a burr has been shown on a workpiece with a flat burr surface at 90° to a flat adjoining surface, in which case the cutting curve will form a straight line in the embodiments shown. However, it is also possible to extrapolate a curved burr surface at an angle different from 90° to a curved adjoining surface, the position of which has been determined, after which deburring can be performed as described above. The accuracy of the position of the basic surfaces and the extrapolation of the adjoining surface are of great significance to the deburring result, as well as the control of the deburring tool towards the cutting curve.

Once the cutting curve 8 between the two surfaces is known, the tool for deburring the workpiece 1 is guided along the curve 8 which is illustrated as a straight line in the figures. Figure 3 shows the result after deburring according to the invention.

## Claims

1. A deburring method, **characterized in that** a laser (3) is directed towards the edge of a workpiece (1) so that the position of a first surface (5) and a second surface (6) joining the first surface at an angle, can be determined, after which extrapolation of a cutting line (8) between the first surface (5) and the second surface (6) is performed; whereby the position of the second surface (6) is determined together with burr (2), after which the position of the first surface is determined without said burr (2), and whereupon said extrapolation comprises a calculation of the extension (7) of the first surface (5) towards the second surface, and **in that** a calculation is performed of the cutting line (8) between the first surface (5) and the second surface (6) and **in that** the burr is thereby removed along the cutting line (8).

2. A deburring method as claimed in claim 1, **characterized in that** an extrapolation of the first surface (5) in the direction of the second surface (6) is performed in order to determine the cutting line (8).

3. A deburring method as claimed in any of the preceding claims, **characterized in that** said laser (3) is directed towards the edge line of a workpiece (1) with burrs in the angle a between the illumination direction and the burr-emanating second surface (6), where 90° < α < 180°.

## Patentansprüche

1. Entgrateverfahren, **dadurch gekennzeichnet, dass** ein Laser (3) auf die Kante eines Werkstücks (1) gerichtet wird, so dass die Position einer ersten Oberfläche (5) und einer zweiten, an die erste Oberfläche in einem Winkel anschließende Oberfläche (6) festgestellt werden kann, woraufhin eine Extrapolierung einer Schnittlinie (8) zwischen der ersten Oberfläche (5) und der zweiten Oberfläche (6) ausgeführt wird; wobei die Position der zweiten Oberfläche (6) gemeinsam mit dem Grat (2) ermittelt wird, woraufhin die Position der ersten Oberfläche ohne den Grat (2) ermittelt wird und woraufhin die Extrapolierung eine Berechnung der Ausdehnung (7) einer ersten Oberfläche (5) gegen die zweite Oberfläche umfasst, und dass eine Berechnung der Schnittlinie (8) zwischen der ersten Oberfläche (5) und der zweiten Oberfläche (6) ausgeführt wird und dass der Grat dadurch entlang der Schnittlinie (8) entfernt wird.

2. Entgrateverfahren nach Anspruch 1, **dadurch gekennzeichnet, dass** eine Extrapolation der ersten Oberfläche (5) in Richtung der zweiten Oberfläche (6) ausgeführt wird, um die Schnittlinie (8) zu ermitteln.

3. Entgrateverfahren nach einem der vorangehenden Ansprüche, **dadurch gekennzeichnet, dass** der Laser (3) im Winkel α zwischen der Einstrahlrichtung und der Grat hervorbringenden zweiten Oberfläche (6) gegen die Kantenlinie eines Werkstücks (1) mit Graten gerichtet wird, wobei 90° < α < 180°.

## Revendications

1. Procédé d'ébavurage, **caractérisé en ce qu'**un laser (3) est dirigé vers le bord d'une pièce à usiner (1), de telle sorte que la position d'une première surface (5) et d'une seconde surface (6) joignant la première surface suivant un angle, peut être déterminée, après quoi l'extrapolation d'une ligne de coupe (8) entre la première surface (5) et la seconde surface (6) est réalisée ; grâce à quoi la position de la seconde surface (6) est déterminée ainsi que les bavures (2), après quoi la position de la première surface est déterminée sans lesdites bavures (2) et après quoi ladite extrapolation comprend le calcul d'un allongement (7) de la première surface (5) vers la seconde surface, **en ce qu'**un calcul est réalisé pour la ligne de coupe (8) entre la première surface (5) et la seconde surface (6) et **en ce que** les bavures sont ainsi retirées le long de la ligne de coupe (8).

2. Procédé d'ébavurage selon la revendication 1, **caractérisé en ce qu'**une extrapolation de la première surface (5) dans la direction de la seconde surface (6) est réalisée afin de déterminer la ligne de coupe (8).

3. Procédé d'ébavurage selon l'une quelconque des revendications précédentes, **caractérisé en ce que** ledit laser (3) est dirigé vers la ligne de bord d'une pièce à usiner (1) présentant des bavures, suivant l'angle a entre le sens de l'irradiation et la seconde surface (6) qui présente des bavures, et où 90° < α < 180°.
